# EUROPÄISCHE PATENTSCHRIFT

(11) **EP 1 299 647 B1**
(45) Veröffentlichungstag und Bekanntmachung des Hinweises auf die Patenterteilung: **04.05.2005**
(21) Anmeldenummer: 01949091.1
(22) Anmeldetag: 03.07.2001
(51) Int. Cl.: F04B 39/00, F16J 1/02

(54) **KOLBENFREISTELLUNG**
PISTON BORE
EVIDEMENT DE PISTON

(30) Priorität: 03.07.2000 AT 11372000
(43) Veröffentlichungstag der Anmeldung: 09.04.2003
(73) Patentinhaber: Verdichter OE GesmbH, 8280 Fürstenfeld (AT)
(72) Erfinder: BRABEK, Walter, A-8380 Jennersdorf Burgenland (AT)
(74) Vertreter: KLIMENT & HENHAPEL
(86) Internationale Anmeldenummer: PCT/AT2001/000217
(87) Internationale Veröffentlichungsnummer: WO 2002/002944

(56) Entgegenhaltungen:
- EP-A- 0 780 572
- US-A- 2 863 707
- US-A- 4 817 505
- US-A- 4 903 580

## Beschreibung

Die vorliegende Erfindung bezieht sich auf einen Kolben für einen Kompressor zur Verwendung in hermetisch gekapselten Kleinkältemaschinen gemäß Oberbegriff des Anspruchs 1.

Der Kolben eines Kompressors hat bekannterweise die Aufgabe, ein Arbeitsmedium zu verdichten. Der Kolben führt dabei in einem Zylinder eine Auf- und Abbewegung aus, wobei die Kolbenmantelfläche im wesentlichen dicht mit der Zylindermantelfläche abschließt, somit sowohl Führungs- als auch Dichtungsaufgaben übernimmt.

Die Reibung der beiden Mantelflächen aneinander führt jedoch zu einem erhöhten Arbeitsaufwand, den der Kolben leisten muß, wodurch der Wirkungsgrad des gesamten Kompressors verringert wird. Es ist daher bei Kolben nach dem Stand der Technik üblich, an der Kolbenmantelfläche Freistellungen vorzusehen, so dass lediglich ein bestimmter Abschnitt der Kolbenmantelfläche die Zylinderwand berührt. Dabei weist die Kolbenmantelfläche im Bereich der Freistellungen einen geringeren Abstand zur Kolbenachse auf als in jenem Bereich, in dem die Kolbenmantelfläche dicht mit der Zylinderwand abschließt. Die Freistellungen sind dabei so tief, dass sich ein tragfähiger Ölfilm nicht mehr ausbilden kann. Die Reibung kann somit stark reduziert werden. Außerdem wird der gesamte Kolben leichter, was ebenfalls den Wirkungsgrad des Kompressors erhöht.

Bekannte Kolben für Kompressoren nach dem Stand der Technik weisen einen Dichtungs- und Führungsflächenabschnitt im Bereich des Kolbenkopfes auf, der zylindermantelförmig ausgebildet ist und über den gesamten Umfang des Kolbens im wesentlichen dicht mit der Zylinderwand abschließt. Die Erstreckung dieses Abschnitts in Bewegungsrichtung des Kolbens ist dabei so gewählt, dass eine ausreichende Abdichtung gegenüber dem Arbeitsmedium vorhanden ist. Zusätzlich weisen solche Kolben nach dem Stand der Technik einen zweiten zylindermantelförmigen Dichtungs- und Führungsflächenabschnitt auf, welcher im anderen Endbereich des Kolbenmantels angeordnet ist und wiederum über den gesamten Umfang des Kolbens im wesentlichen dicht mit der Zylindermantelfläche abschließt. Es verbleibt somit eine ebenfalls zylindermantelförmige Freistellung zwischen den beiden Dichtungs- und Führungsflächenabschnitten.

Bei einer Kolbenmantelflächenausbildung wie sie im Stand der Technik erfolgt, besteht jedoch das Problem, dass es im unteren Totpunkt des Kolbens zu einem Ausfädeln dieses zusätzlichen Dichtungs- und Führungsabschnittes aus dem Zylinder kommen kann. Um Gewicht des gesamten Kompressors einzusparen, wird das Zylindergehäuse nur mit einer solchen Länge ausgebildet, wie es der Hub des Kolbens erfordert. Dabei fährt der Kolben im unteren Totpunkt ein Stück aus dem Zylinder heraus. Je kürzer das Zylindergehäuse gebaut ist, desto größer ist die Gewichts- u nd Materialersparnis, desto weiter fährt der Kolben jedoch im unteren Totpunkt aus dem Zylinder heraus.

Bei Kolben für Kompressoren nach dem Stand der Technik ist hier jedoch durch die Höhe des zweiten zylindermantelförmigen Dichtungs- und Führungsflächenabschnittes eine Grenze gesetzt. Weiter kann der Kolben nicht aus dem Zylinder bewegt werden, da im Bereich der Freistellung keine Führung des Kolbens mehr erfolgen kann, wodurch dieser seitlich wegkippen würde und ein Einfädeln des unteren Dichtungs- und Führungsflächenabschnittes am Kolben in den Zylinder nicht mehr möglich wäre. Eine Verlängerung der Höhe des zweiten zylindermantelförmigen Dichtungs- und Führungsflächenabschnittes würde jedoch wieder die Reibungund das Gewicht unnötig erhöhen.

Aus der US 4,350,083 ist weiters ein Kolben bekannt, der zur Verschleissverminderung mit Freistellungen an der Kolbenmantelfläche versehen ist. Diese sind jedoch flächenmäßig so klein ausgebildet, dass eine merkbare Reibungsverminderung und somit Energieeinsparung nicht stattfindet.

Es ist daher die Aufgabe der vorliegenden Erfindung, diesen Nachteil zu verhindern und einen Kolben für Kompressoren vorzusehen, der trotz teilweisem Herausführen desselben aus dem Zylindergehäuse während eines Arbeitshubes, wieder problemlos in dieses eingeführt werden kann, wobei trotzdem reibungs- und gewichtsmindernde Freistellungen an der Kolbenmantelfläche vorgesehen sind und eine ausreichende Führung des Kolbens garantiert ist.

Erfindungsgemäß wird diese Aufgabe durch die kennzeichnenden Merkmale des Anspruchs 1 gelöst.

Durch die Ausbildung mehrerer die Form eines Zylindermantelflächensektors aufweisende, schmale, stegförmige, sich im wesentlichen in Bewegungsrichtung des Kolbens erstreckende Dichtungs- und Führungsflächenabschnitte kann der Kolben im Bereich des unteren Totpunktes auch zu einem größeren Teil aus dem Zylinder herausgeführt und der herausragende Teil wieder problemlos in den Zylinder eingeführt werden, da während des gesamten Vorgangs stets ausreichend Dichtungs- und Führungsflächenabschnitte in Kontakt mit der Zylinderwand sind. Durch die lediglich schmale Ausbildung der Stege kann gleichzeitig die Reibung im System merkbar verringert werden. Da eine Kolbenseite aufgrund der Drehbewegung des Pleuels stets stärker belastet ist, kann der an dieser Kolbenseite angeordnete zylindermantelsektorförmige Dichtungs- und Führungsflächenabschnitt stärker ausgebildet sein als jener, im weniger stark belasteten Bereich des Kolbens angeordneter Abschnitt.

Durch die Merkmale der Ansprüche 2 und 3 kann eine optimale Führung in Bewegungsrichtung des Kolbens garantiert werden.

Durch die kennzeichnenden Merkmale des Anspruchs 4 kann die Höhe der zylindermantelsektorförmigen Dichtungs- und Führungsflächenabschnitte exakt auf jene Länge abgestimmt werden, die der Kolben im unteren Totpunkt aus dem Zylinder herausragt.

Durch die Merkmale des Anspruchs 5 können auch diese zusätzlichen Dichtungs- und Führungsflächenabschnitte noch hinsichtlich Reibungswiderstand und Gewicht optimiert werden.

Das Merkmal des Anspruchs 6 beschreibt eine bevorzugte Ausführungsform eines erfindungsgemäßen Kolbens.

Durch die das Merkmal des Anspruchs 7 kann die Reibung zusätzlich verringert und gleichzeitig Gewicht eingespart werden.

Im Anschluss erfolgt nun eine detaillierte Beschreibung der Erfindung und des Standes der Technik anhand von Zeichnungen.

Dabei zeigt:
- Fig.1: einen Kolben nach dem Stand der Technik
- Fig.2: einen axonometrische Ansicht eines erfindungsgemäßen Kolbens
- Fig.3: eine weitere axonometrische Ansicht eines erfindungsgemäßen Kolbens
- Fig.4: eine axonometrische Ansicht einer bevorzugten Ausführungsform eines erfindungsgemäßen Kolbens
- Fig.5: eine axonometrische Ansicht einer bevorzugten Ausführungsform eines erfindungsgemäßen Kolbens
- Fig.6: eine Draufsicht eines erfindungsgemäßen Kolbens
- Fig.7: eine axonometrische Ansicht einer weiteren bevorzugten Ausführungsform eines erfindungsgemäßen Kolbens

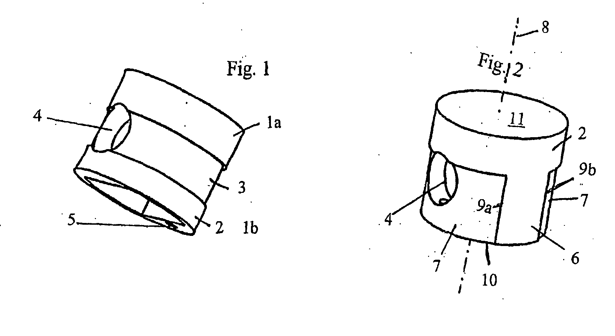

Fig.1 zeigt einen Kolben für Kompressoren nach dem Stand der Technik. Zwei zylindermantelförmige Dichtungs- und Führungsflächenabschnitte 1a, 1b schließen eine ebenfalls zylindermantelförmige Freistellung 3 ein. Im Bereich der Freistellung 3 ist die Kolbenbolzenbohrung 4 zu sehen, sowie eine Bohrung 5, durch welche ein Fixierstift (nicht gezeichnet) steckbar ist, der dazu dient den Kolbenbolzen zu fixieren.

Die Höhe des Dichtungs- und Führungsflächenabschnittes 1a ist so gewählt, dass eine ausreichende Abdichtung gegenüber dem Arbeitsmedium (nicht gezeichnet) gegeben ist. Die Höhe des Dichtungs- und Führungsflächenabschnittes 1b ist bei Kolben nach dem Stand der Technik lediglich sehr gering, sodass bei einem Herausführen des Kolbens aus dem Zylinder im unteren Totpunkt ein leichtes Wegknicken des Kolbens stattfinden würde bis die Zylinderwandkante die Freistellung berührt. Der Kolben würde zu diesem Zeitpunkt also schief im Zylinder stecken. Bei der darauffolgenden Aufwärtsbewegung könnte der Dichtungs- und Führungsflächenabschnitt 1b nicht mehr in den Zylinder eingeführt werden, da die Kante des Dichtungs- und Führungsflächenabschnittes 1b sich mit der Zylinderwandkante verkeilen würde.

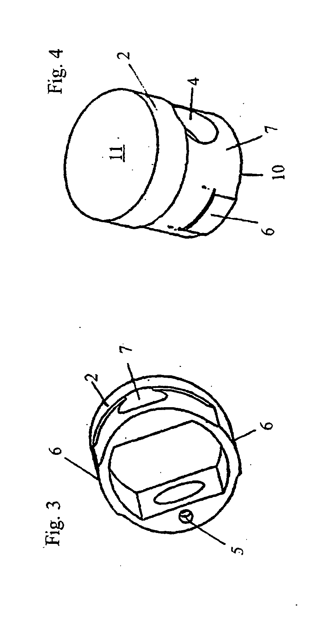

Fig.2 und Fig.3 zeigen axonometrische Ansichten eines erfindungsgemäßen Kolbens, welcher aus Sintermaterialien oder als Gussteil gefertigt ist. Zusätzlich zu dem zylindermantelförmigen Dichtungs- und Führungsflächenabschnitt 2 sind im Anschluss daran zwei stegförmige, die Form eines Zylindermantelflächensektors aufweisende, sich im wesentlichen parallel zur Bewegungsrichtung des Kolbens erstreckende Dichtungs- und Führungsflächenabschnitte 6 angeordnet, welche von einer Freistellung 7 umgeben sind. Im Bereich der Freistellung 7 ist auch die Kolbenbolzenbohrung 4 zu sehen.

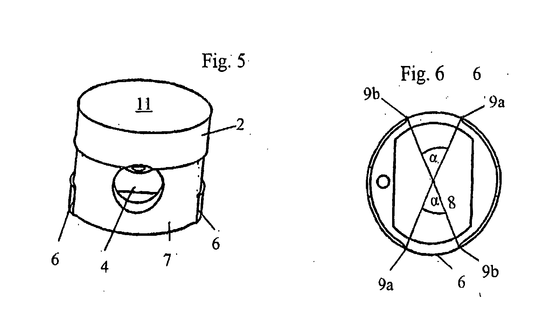

Eine bevorzugte Ausführungsvariante sieht, wie in Fig.4 und Fig.5 gezeigt, vor, dass die stegförmigen, die Form eines Zylindermantelflächensektors aufweisende Dichtungs- und Führungsflächenabschnitte 6 lediglich so hoch ausgeführt sind, dass der Kolben aus dem Zylinder im unteren Totpunkt nicht ausgefädelt wird.

Durch die erfindungsgemäßen Dichtungs- und Führungsflächenabschnitte 6 ist stets eine ausreichende Führung des Kolbens im Zylinder garantiert und zwar nicht nur falls der Kolben überhaupt nicht aus dem Zylinder ausfährt, sondern auch wenn der Kolben im unteren Totpunkt bis zur Hälfte der gesamten Kolbenhöhe aus dem Zylinder herausragt. Gleichzeitig können aber trotzdem ausreichend Freistellungen vorhanden sein, um die Reibung und das Gewicht des Kolbens zu minimieren.

Die Breite der erfindungsgemäßen Dichtungs- und Führungsabschnitte 6 ist dabei so gewählt, dass sich ein für die Schmierung ausreichender Ölfilm bilden kann. Gemäß Fig.6 ist der Winkel α zwischen den Verbindungslinien der Begrenzungskanten 9a,9b eines jeden stegförmigen, die Form eines Zylindermantelflächensektors aufweisende Dichtungs- und Führungsflächenabschnittes 6 mit der dazugehörenden Drehachse 8 kleiner als 40° vorzugsweise kleiner als 30°. Dadurch können diese Dichtungs- und Führungsflächenabschnitte sehr klein gehalten werden, wodurch die Reibung und das Gewicht des Kolbens vermindert wird aber sich trotzdem noch ein ausreichender Ölfilm zwischen den Dichtungs- und Führungsabschnitten 6 und der Zylinderwand bilden kann.

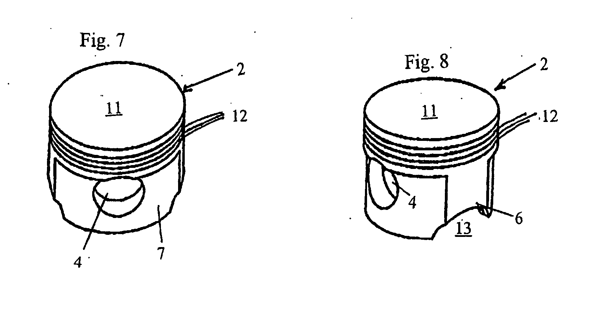

Fig.7 und Fig.8 zeigen eine weitere bevorzugte Ausführungsvariante. Dabei ist der obere zylindermantelförmige Dichtungs- und Führungsflächenabschnitt 2 durch mehrere Ölnuten 12 unterteilt. Im unteren Bereich der erfindungsgemäßen zylindermantelsektorförmigen Dichtungs- und Führungsflächen 6 ist jedoch eine im wesentlichen kreissektorförmige Ausfräsung 13 vorgesehen, welche den Reibungswiderstand weiter verringert und zusätzlich Gewicht einsparen hilft.

## Patentansprüche

1. Kolbenringnutenfreier Kleinkältemaschinenkompressorkolben, mit einem zylindermantelförmigen Dichtungs- und Führungsflächenabschnitt (1a,2) sowie mindestens zwei im wesentlichen steg- und zylindermantelsektorförmige, sich im wesentlichen parallel zur Bewegungsrichtung des Kolbens erstreckende Dichtungs- und Führungsflächenabschnitte der Kolbenmantelfläche, die im wesentlichen dicht mit der Zylinderwand abschließen und die Führung des Kolbens im Zylinder ermöglichen sowie den Kurbelkasten gegen den Saug- bzw. Verdichtungsraum abdichten und andere Abschnitte der Kolbenmantelfläche eine Freistellung (3,7) aufweisen, wodurch ein Abstand zwischen Kolbenmantelfläche und Zylinderwand vorhanden ist und , **dadurch gekennzeichnet, dass** der Winkel (α) zwischen den Verbindungslinien der in Achsrichtung des Kolbens verlaufenden Begrenzungskanten (9a,9b) eines jeden steg- und zylindermantelsektorförmigen Dichtungs- und Führungsflächenabschnittes (6) mit der dazugehörenden Drehachse (8) kleiner als 40° vorzugsweise kleiner als 30° ist und die steg- und zylindermantelflächensektorförmigen Dichtungs- und Führungsflächenabschnitte (6) unterschiedliche Tiefe aufweisen.

2. Kolben nach Anspruch 1, **dadurch gekennzeichnet, dass** jeweils ein Endbereich eines steg- und zylindermantelflächensektorförmigen Dichtungs- und Führungsflächenabschnitts (6) bündig mit dem dem Kurbelgehäuse näherliegenden Ende (10) des Kolbens abschließt.

3. Kolben nach einem der Ansprüche 1 oder 2, **dadurch gekennzeichnet, dass** jeweils ein Endbereich eines steg- und zylindermantelflächensektorförmigen Dichtungs- und Führungsflächenabschnitts (6) in den zylindermantelförmigen Dichtungs- und Führungsflächenabschnitt (2) der Kolbenmantelfläche übergeht.

4. Kolben nach einem der Ansprüche 1 bis 3, **dadurch gekennzeichnet, dass** die steg- und zylindermantelflächensektorförmige Dichtungs- und Führungsflächenabschnitte (6) sich von dem dem Kurbelgehäuse näherliegenden Ende (10) des Kolbens in Richtung Kolbenkopf (11) über einer Länge erstrecken, welche mindestens jener Länge entspricht, die der Kolben im unteren Totpunkt aus dem Zylindergehäuse hervorsteht.

5. Kolben nach einem der Ansprüche 1 bis 4, **dadurch gekennzeichnet, dass** jeder steg- und zylindermantelflächensektorförmige Dichtungs- und Führungsflächenabschnitt (6) von mehreren punktförmigen Freistellungen unterbrochen ist.

6. Kolben nach einem der Ansprüche 1 bis 5, **dadurch gekennzeichnet, dass** die Kolbenbolzenbohrung (4) im **Bereich der** Freistellung (7) angeordnet ist.

7. Kolben nach einem der Ansprüche 1 bis 6, **dadurch gekennzeichnet, dass** in dem dem Kurbelgehäuse näherliegenden Endbereich (10) des Kolbens im Bereich der zylindermantelsektorförmigen Dichtungs- und Führungsflächen 6 jeweils eine Aussparung 13 angeordnet ist.

## Claims

1. A piston-ring-groove-free compressor piston for a small-type refrigerating machine, comprising a cylinder-jacket-shaped sealing and guide surface section (1a, 2) and at least two sealing and guide surface sections of the piston-skirt surface which are substantially shaped in the manner of a web and cylinder jacket, extend substantially parallel to the direction of movement of the piston and close off with the cylinder wall in a substantially sealed manner and allow the guidance of the piston in the cylinder and seal the crankcase against the suction and compression chamber, and other sections of the piston-skirt surface comprise a clearance (3, 7) through which a distance between the piston-skirt surface and the cylinder wall is produced, **characterized in that** the angle (α) between the connecting lines of the delimitation edges (9a, 9b) of each web- and cylinder-jacket-sector-like sealing and guide surface section (6), which delimitation edges extend in the axial direction of the piston, is smaller than 40° with the associated rotational axis (8), preferably smaller than 30°, and the web- and cylinder-jacket-surface-sector-like sealing and guide surface sections (6) have a different depth.

2. A piston according to claim 1, **characterized in that** an end section each of a web- and cylinder-jacket-surface-sector-like sealing and guide surface section (6) occludes in a flush manner with the end (10) of the piston which is closer to the crankcase.

3. A piston according to one of the claims 1 or 2, **characterized in that** one end region each of a web- and cylinder-jacket-surface-sector-like sealing and guide surface section (6) converges into the cylinder-jacket-like sealing and guide surface section (2) of the piston-skirt surface.

4. A piston according to one of the claims 1 to 3, **characterized in that** the web- and cylinder-jacket-surface-sector-like sealing and guide surface sections (6) extend from the end (10) of the piston closer to the crankcase in the direction towards the piston head (11) over a length which corresponds at least to the length which the piston projects from the cylinder housing at the lower dead center.

5. A piston according to one of the claims 1 to 4, **characterized in that** every web- and cylinder-jacket-surface-sector-like sealing and guide surface section (6) is interrupted by several point-shaped clearances.

6. A piston according to one of the claims 1 to 5, **characterized in that** the piston pin bore (4) is arranged in the region of the clearance (7).

7. A piston according to one of the claims 1 to 6, **characterized in that** in the end region (10) of the piston which is closer to the crankcase there is arranged one recess (13) each in the region of the cylinder-jacket- sector-like sealing and guide surface section (6).

## Revendications

1. Piston de compresseur de machine frigorifique à faible puissance dépourvu de gorge de segment de piston avec une portion de surface d'étanchéité et de guidage (1a, 2) en forme d'enveloppe d'un cylindre ainsi qu'avec au moins deux portions de surface d'étanchéité et de guidage de la surface d'enveloppe du piston ayant sensiblement la forme d'un barrette et d'un secteur d'enveloppe d'un cylindre et s'étendant sensiblement parallèlement à la direction de mouvement du piston, ces deux portions de surface formant un joint étanche avec la paroi du cylindre, permettant le guidage du piston dans le cylindre et isolant hermétiquement le carter de vilebrequin par rapport à la chambre d'aspiration ou de compression, d'autres portions de la surface d'enveloppe du piston comportant un dégagement (3, 7) ménageant un espace entre la surface d'enveloppe du piston et la paroi du cylindre et **caractérisé en ce que** l'angle (α) entre les lignes de jonction reliant les bords (9a, 9b) délimitant chacune des portions de surface d'étanchéité et de guidage (6) en forme de barrette et de secteur d'enveloppe d'un cylindre et s'étendant dans la direction de l'axe du piston avec l'axe de rotation (8) associé est inférieur à 40°, de préférence inférieur à 30° et que les portions de surface d'étanchéité et de guidage (6) en forme de barrette et de secteur d'enveloppe d'un cylindre ont différentes profondeurs.

2. Piston selon la revendication 1, **caractérisé en ce qu'**une région d'extrémité de chaque portion de surface d'étanchéité et de guidage (6) en forme de barrette et de secteur d'enveloppe d'un cylindre affleure au niveau de l'extrémité (10) du piston la plus proche du carter de vilebrequin.

3. Piston selon l'une quelconque des revendications 1 ou 2, **caractérisé en ce qu'**une région d'extrémité de chaque portion de surface d'étanchéité et de guidage (6) en forme de barrette et de secteur d'enveloppe d'un cylindre vient en continuité de la portion de surface d'étanchéité et de guidage (2) en forme d'enveloppe d'un cylindre de la surface d'enveloppe du piston.

4. Piston selon l'une quelconque des revendications 1 à 3, **caractérisé en ce que** les portions de surface d'étanchéité et de guidage (6) en forme de barrette et de secteur d'enveloppe d'un cylindre s'étendent à partir de l'extrémité (10) du piston la plus proche du carter de vilebrequin en direction de la tête du piston (11) sur une distance correspondant au moins à la distance sur laquelle le piston, au point mort bas, fait saillie par rapport au boîtier du cylindre.

5. Piston selon l'une quelconque des revendications 1 à 4, **caractérisé en ce que** dans chaque portion de surface d'étanchéité et de guidage (6) en forme de barrette et de secteur d'enveloppe d'un cylindre sont ménagés plusieurs dégagements ponctuels.

6. Piston selon l'une quelconque des revendications 1 à 5, **caractérisé en ce que** le trou (4) de l'axe du piston est disposé à la hauteur du dégagement (7).

7. Piston selon l'une quelconque des revendications 1 à 6, **caractérisé en ce qu'**un évidement (13) est disposé dans la région d'extrémité (10) du piston la plus proche du carter de vilebrequin à la hauteur des portions de surface d'étanchéité et de guidage (6) en forme de secteur d'enveloppe d'un cylindre.
